# EUROPEAN PATENT SPECIFICATION

(11) **EP 4 099 661 B1**
(45) Date of publication and mention of the grant of the patent: **19.03.2025**
(21) Application number: 21176813.0
(22) Date of filing: 31.05.2021
(51) Int. Cl.: H04L 41/142, H04L 41/16, H04L 41/147, H04L 43/04, H04L 41/0677, H04L 41/5009

(54) **ANOMALY IDENTIFIER, A TELECOMMUNICATIONS NETWORK COMPRISING AN ANOMALY IDENTIFIER, METHOD FOR IDENTIFYING AN ABNORMAL ACTIVITY, MODEL DETERMINATION UNIT, SYSTEM, AND METHOD FOR DETERMINING A PREDICTION MODEL**
ANOMALIEIDENTIFIKATOR, TELEKOMMUNIKATIONSNETZWERK MIT EINEM ANOMALIEIDENTIFIKATOR, VERFAHREN ZUR IDENTIFIZIERUNG EINER ANORMALEN AKTIVITÄT, MODELLBESTIMMUNGSEINHEIT, SYSTEM UND VERFAHREN ZUR BESTIMMUNG EINES VORHERSAGEMODELLS
IDENTIFICATEUR D'ANOMALIE, RÉSEAU DE TÉLÉCOMMUNICATIONS COMPRENANT UN IDENTIFICATEUR D'ANOMALIE, PROCÉDÉ D'IDENTIFICATION D'ACTIVITÉ ANORMALE, UNITÉ DE DÉTERMINATION DE MODÈLE, SYSTÈME ET PROCÉDÉ DE DÉTERMINATION D'UN MODÈLE DE PRÉDICTION

(43) Date of publication of application: 07.12.2022
(73) Proprietor: Robert Bosch GmbH, 70442 Stuttgart (DE)
(72) Inventor: Zhang, Dan, 71229 Leonberg (DE); Ramos Cantor, Oscar Dario, 31135 Hildesheim (DE)

(56) References cited:
- EP-A1- 3 355 547
- US-A1- 2016 103 838
- US-A1- 2020 145 304
- QI SUN CHINA MOBILE ET AL: "Draft Supplement Y.ML-IMT2020-Use-Cases "Machine learning in future networks including IMT-2020: use cases", output of Q20/13 e-meeting, 5-7, 12 and 16 August 2019;TDXXX/WP1", vol. 20/13, 13 August 2019 (2019-08-13), pages 1 - 58, XP044269114, Retrieved from the Internet <URL:https://www.itu.int/ifa/t/2017/sg13/exchange/wp1/q20/2019-08/drafting/Draft-Output-Y.ML-IMT2020-Use-Cases-v1.docx> [retrieved on 20190813]
- "WD/CD/DIS/FDIS stage;ML5G-I-163", vol. ML5G, 9 July 2019 (2019-07-09), pages 1 - 260, XP044273161, Retrieved from the Internet <URL:https%3A/extranet.itu.int/sites/itu-t/focusgroups/ML5G/input/ML5G-I-163.zip%20ML5G-I-163_att3.pdf> [retrieved on 20190709]

## Description

### State of the art

The invention relates to an anomaly identifier, anomaly identification network, method for identifying an abnormal activity, model determination unit, system, and method for determining a prediction model.

With the increasing level of manufacturing digitalization, automation and flexibilization, the wireless telecommunications networks start to play increasingly critical role in factory operation. One of the main concerns in such critical wireless networks is the intrusion of external unwanted entities as well as jamming of the wireless spectrum.

From the communication service perspective, and more specifically, the wireless communication service, successful transmission of data depends on a plethora of parameters like the transmit power, environment, channel conditions, etc. Due to the large number of these parameters and the interrelations between them, it is difficult to generate models that closely approximate real conditions, especially for highly varying environments. For that reason, the network needs to be designed under certain assumptions of normal operation. If during operation, these normal conditions are not present, errors in the communication take place, which are then corrected by the communication system by reactive means such as the usage of retransmissions. These reactive means represent, however, less available resources for other applications or, in the worst case, a complete failure of the application.

EP 3 355 547 A1 discloses a method, system and computer program product for learning representations or embeddings of networkflow traffic. The key aspect is operating on network flow data which are then used as inputs to a deep-learning architecture that learns to embed the data into a vector space.

### Disclosure

The problems of the prior art are solved by an anomaly identifier according to claim 1, a telecommunications network comprising an anomaly identifier according to a further claim, a method for identifying an abnormal activity according to a further claim, a model determination unit according to a further claim, a system according to a further claim, and a method for determining a prediction model according to a further claim.

Claim 1 is directed to an anomaly identifier for identifying an abnormal activity in a telecommunications network, wherein the anomaly identifier comprises
a receiver unit configured to receive a plurality of network measurements in relation to the telecommunications network;
a model-based mapping unit configured to map the received plurality of network measurements via a machine-trained prediction model to an anomaly prediction indicator, and
an output unit configured to provide the anomaly prediction indicator, which indicates the prediction of the abnormal activity in the telecommunications network.

The anomaly identifier is configured to differentiate between normal "bad" behaviour, e.g., expected bad channel impulse response due to fading, and abnormal "bad" behaviour due to unknown reasons. The abnormal bad behaviour is identified as abnormal activity. The proposed approach can be used to predict anomalies whose presence is predictable before their harmful actions. This is because the proposed approach does not limit to detect unexpected anomalies, but it predicts their occurrence in the future by identifying patterns, among others, such that reactive measure can be carried out. Moreover, complicated manual expert analysis of an attack is avoided as quickly activated countermeasures prevents damage.

The described anomaly identification allows prediction of abnormal activity in the telecommunications network. Subsequent reaction to any predicted local network disturbances taking place in the telecommunications network is therefore possible. For example, wireless 5G networks in a factory being part of the telecommunications network benefit as abnormal activity caused by active intruders or infected abnormal acting network entities can be predicted in order to take countermeasures.

In summary, telecom operators for private and public networks will benefit as the provided approach guarantees a reliable operation of the telecommunications network by reacting appropriately upon predicting an anomaly via the anomaly prediction indicator.

Furthermore, the prediction model is trained to predict the radio environment at a prospective measurement time slot, and the anomaly prediction indicator is provided in dependence to a comparison of network measurements and the predicted radio environment.

Prediction of the radio environment comprises for example prediction of quantities such as spectrum, signal strength, channel impulse response, signal-to-interference-plus-noise ratio, SINR.

According to an advantageous example, the comparison between the predicted radio environment and the network measurements is evaluated using an applicable distance measure, for example a distance based on an applicable Lp norm. The applicable distance measure is based for example on the network measurements and/or on the predicted radio environment.

According to an advantageous example, the anomaly identifier comprises a neural classification network, and the neural classification network is trained to classify a consistency between the network measurements and the predicted radio environment. Advantageously the neural classification network is used instead of using a handcrafted evaluation metric, for example the Lp distance.

According to a further advantageous example, the prediction model is trained to directly predict an abnormal activity. In this case, the output of the prediction model provides the anomaly detection indicator directly to the output unit.

According to an advantageous example, the output unit or a further output unit of the anomaly identifier is configured to provide a reliability indicator. The reliability indicator provides a measure of the reliability of the anomaly prediction indicator. If the prediction is not reliable, the anomaly prediction indicator is ignored and no countermeasures are prepared. If the prediction is reliable, the anomaly prediction indicator is taken into account and countermeasures are prepared to make the communication in the telecommunication network more robust before the anomaly occurs.

According to a further advantageous example the model based mapping unit or a further model-based mapping unit of the anomaly identifier is configured to map the received plurality of network measurements via a machine-trained anomaly detection model to an anomaly detection indicator, and the output unit or a further output unit is configured to provide the anomaly detection indicator, which indicates the detection of the abnormal activity in the telecommunications network. By combining a detection and a prediction model in the anomaly identifier both steps, namely prediction and detection and therefore the advantages of both steps, can be combined.

Claim 6 relates to a computer-implemented method for identifying an abnormal activity in a telecommunications network, wherein the method comprises the steps of
receiving a plurality of network measurements in relation to the telecommunications network;
mapping the received plurality of network measurements via a machine-trained prediction model to an anomaly prediction indicator; wherein the prediction model predicts the radio enviroinment at a prospective measurement time slot, and
providing the anomaly prediction indicator, which indicates the prediction of the abnormal activity in the telecommunications network, wherein the anomaly prediction indicator is provided in dependence to a comparison of network measurements and the predicted radio environment.

Claim 7 refers to a telecommunications network comprising an anomaly identifier according to any of the embodiments, a plurality of network probes, a network controller and a plurality of communication devices.

According to an advantageous example, an interface between the anomaly identifier and the network controller for communication is provided. According to one embodiment, the functionality of the anomaly identifier is implemented at least partly at the network side. According to another embodiment, the functionality of the anomaly identifier is implemented at least partly at the communication device side. The interface between the anomaly identifier and the network controller is defined in order to provide application-specific alarms, in particular based on the anomaly prediction indicator, and to inform how reliable the alarms are, in particular based on a/the reliability indicator. If the alarm is not reliable, the network controller ignores the alarm and does not prepare countermeasures. If the alarm is reliable, the alarm is taken into account and countermeasures are prepared to make the communication in the telecommunication network more robust before the anomaly occurs.

According to a further advantageous example, in particular if a functionality of the anomaly identifier is implemented at least partly at the communication device side, the channel state information, CSI, report method is used to provide application-specific alarms, in particular based on the anomaly prediction indicator. This would mean that the CSI reporting method considers the alarms to reflect a worse CSI in the future.

Claim 10 refers to computer-implemented-method of operating a telecommunications network according to any of the embodiments, wherein the method comprises at least the steps of
receiving at an anomaly identifier a plurality of network measurements in relation to the telecommunications network;
mapping at the anomaly identifier the received plurality of network measurements via a machine-trained prediction model to an anomaly prediction indicator, wherein the prediction model predicts the radio enviroinment at a prospective measurement time slot;
providing at the anomaly identifier the anomaly prediction indicator, which indicates the prediction of the abnormal activity in the telecommunications network, wherein the anomaly prediction indicator is provided in dependence to a comparison of network measurements and the predicted radio environment;
sending an alarm based on the anomaly prediction indicator to the network controller;
receiving an alarm at the network controller, and
taking reactive measures at the network controller.

Advantageously, by taking reactive measures based on the anomaly prediction indicator allows to react before the abnormal activity actually occurs thereby avoiding communication errors. The alarm may comprise or consist of the anomaly prediction indicator.

Claim 11 refers to a model determination unit for determining a prediction model, wherein the model determination unit comprises:
an aggregator unit configured to aggregate training data comprising a plurality of network measurements of a telecommunications network;
a training unit configured to train the prediction model in dependence on the training data, wherein the prediction model is trained to predict the radio environment at a prospective time slot and/or to predict an abnormal activity. Advantageously, the prediction model learns a temporal correlation in the radio environment from training data and exploits the temporal correlation for prediction during operation of the anomaly identifier. The prediction model is trained to differentiate between normal and abnormal activity in the radio environment.

According to one embodiment, aggregating training data comprises collecting data by recording data of the radio environment of interest, for example by performing a plurality of network measurements in relation to a telecommunications network of interest. According to another embodiment, the training data is collected by means of simulation, in particular by simulating envisioned abnormal activity.

According to an advantageous example, aggregating training data comprises labelling the collected data, in particular by using an anomaly detection model to detect anomalies in the data. For example, the training data is labelled as normal and abnormal activity. According to one embodiment, the training data is labelled manually. According to a further embodiment, the training data is labelled using a/the anomaly detection model. The anomaly detection model can be used for labelling the radio environment records thereby reducing and/or avoiding manual labelling effort.

According to an advantageous example the model determination unit is configured to train a neural classification network, wherein the neural classification network is trained to classify a consistency or an inconsistency between network measurements and predicted radio environment. Advantageously training data for training the neural classification network contains data relating to abnormal activity. The training of the neural classification network can be supervised and unsupervised. In the supervised setting, with the labeled normal and abnormal cases, a neural network classification network can be trained to detect if the predicted and measured radio environment at the prospective time slot are similar or not. In the unsupervised setting, the similarity between the predicted and measured radio environment at the prospective time slot can be quantified by distance measures, such as Lp norm or perceptual loss.

Claim 13 refers to a computer-implemented method for determining a prediction model during operation of a telecommunications network, wherein the method comprises:
aggregating training data comprising a plurality of network measurements of a telecommunications network, wherein aggregating the training data comprises collecting data by receiving a plurality of network measurements in relation to the telecommunications network and labelling the collected data, in particular by using an anomaly detection model to detect anomalies in the data;
training the prediction model in dependence on the training data.

By determining the prediction model during operation of a telecommunications network using an anomaly detection model, the prediction model does not need to be intensely trained beforehand, but can be trained during operation. Advantageously the prediction model improves over time. According to one embodiment, the prediction feature of the anomaly identifier can be used in the telecommunications network in some point of time, in particular when the prediction is reliable enough.

According to a further aspect, a computer-implemented method for determining a prediction model is adapted to operate a model determination unit according to the embodiments.

Claim 15 refers to a system comprising an anomaly identifier according to the embodiments and a model determination unit according to the embodiments.

According to a further preferred embodiment, the system is part of a communication network according to the above described embodiments.

The proposed approach can be used in any telecommunication system, which needs to satisfy requirements for a proper operation, for example, a telecommunication system comprising an automated guided vehicle, AGV. The AGV needs for example to transmit its status to a controller entity which, based on this status, adjusts the movement of the AGV (e.g., trajectory, speed, etc.). For the AGV application, the communication can take place with a given cycle time, in which a status message is sent from the AGV and a corresponding control message is sent from the controller.

Further advantageous embodiments are derived from the following description and the drawings. In the drawings
- Fig. 1: depicts a schematic block diagram of an anomaly identifier according to an embodiment;
- Fig. 2: depicts an exemplary telecommunications network according to an embodiment;
- Fig. 3: depicts a schematic flow diagram of a computer-implemented method according to an embodiment;
- Fig. 4: depicts a schematic block diagram of a model determination unit according to an embodiment;
- Fig. 5: depicts a schematic block diagram of a system comprising a model determination unit and an anomaly identifier according to an embodiment;
- Fig. 6: depicts schematically a training of a prediction model according to an embodiment, and
- Fig. 7a and 7b: depict different sequences of network measurements, in particular signal-to-interference-plus-noise ratio, SINR, over time.

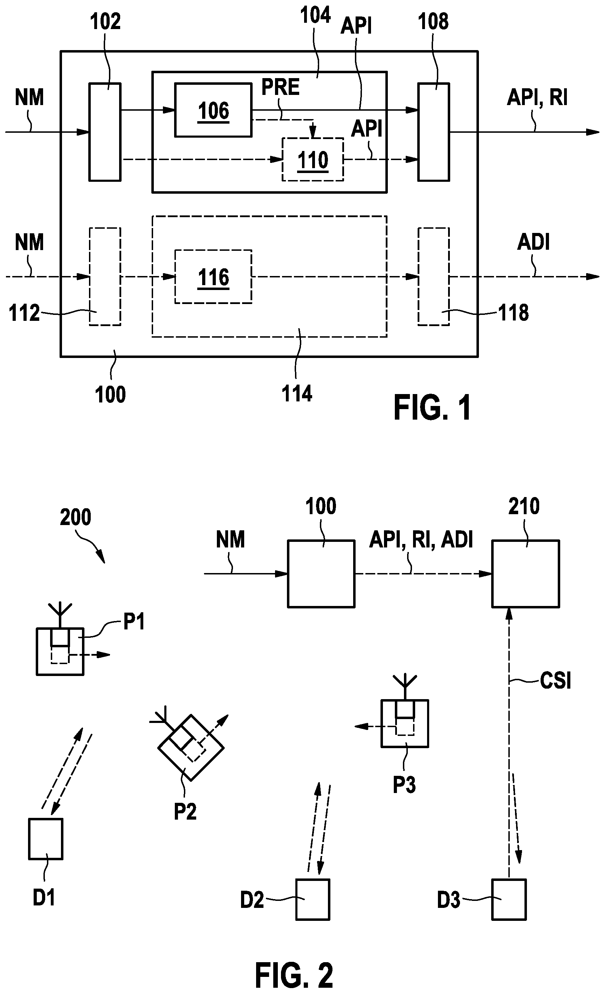

Figure 1 depicts a schematic block diagram of an anomaly identifier 100, which is configured for identifying an abnormal activity in a telecommunications network 200. The telecommunications network 200 is described below with regard to figure 2.

The anomaly identifier 100 is configured to differentiate between normal "bad" behaviour, e.g., expected bad channel impulse response due to fading, and abnormal "bad" behaviour due to unknown reasons. The abnormal bad behaviour is identified as abnormal activity.

The anomaly identifier 100 comprises a receiver unit 102, which is configured to receive a plurality of network measurements NM in relation to an observed telecommunications network, for example, the telecommunications network 200. The anomaly identifier 100 comprises a model-based mapping unit 104 which is configured to map the received plurality of network measurements NM via a machine-trained prediction model 106 to an anomaly prediction indicator API. The anomaly identifier 100 comprises an output unit 108 which is configured to provide the anomaly prediction indicator API, which indicates the prediction of the abnormal activity in the observed telecommunications network.

The network measurements NM in relation to the telecommunications network comprise measurements like throughput, signal strength, QoS, radio usage, wire usage, etc. sensed by network probes which are distributed over the telecommunications network. The network measurements NM can comprise network measurements from a radio domain and network measurements from a wired domain. Under normal condition, the radio environment, for example spectrum, signal strength, channel impulse response, is expected to continuously vary over the time. Anomalies will cause abrupt changes. The inconsistency between consecutive time slots can be used for anomaly prediction.

Figure 1 depicts different variants for anomaly prediction.

According to a first variant, the prediction model 106 is trained to directly predict an abnormal activity. In this case, an output of the prediction model 106 provides the anomaly detection indicator API directly to the output unit 108.

According to a second variant, the prediction model 106 is trained to predict the radio environment PRE at a prospective measurement time slot. According to the embodiment, the anomaly identifier 100 comprises a classification entity 110, which is displayed with dashed lines. For example, a comparison between the predicted radio environment PRE and the network measurements NM is evaluated by the classification entity 110 using an applicable distance measure, for example a distance based on an applicable Lp norm. The applicable distance measure is based for example on the network measurements NM and/or on the predicted radio environment PRE.

According to a third variant, the classification entity 110 is a neural classification network 110. The neural classification network 110 is trained to classify a consistency between the network measurements NM and the predicted radio environment PRE. Advantageously, the neural classification network 110 is used instead of using a handcrafted evaluation metric, for example the Lp distance.

According to the embodiment displayed in figure 1, the output unit 108 is configured to provide a reliability indicator RI. The reliability indicator RI provides a measure of the reliability of the anomaly prediction indicator API. If the prediction is not reliable, the anomaly prediction indicator is ignored and no countermeasures are prepared. If the prediction is reliable, the anomaly prediction indicator is taken into account and countermeasures are prepared to make the communication in the telecommunication network more robust before the anomaly occurs. The reliability indicator RI can be calculated by an entity of the model-based mapping unit 104 or another entity of the anomaly identifier 100.

According to another embodiment the anomaly identifier 100 can comprise a further output unit for providing the reliability indicator RI.

According to the depicted embodiment of figure 1, the anomaly identifier 100 comprises a further receiver unit 112, which is configured to receive a plurality of network measurements NM in relation to an observed telecommunications network. Further, the anomaly identifier 100 comprises a further model-based mapping unit 114, which is configured to map the received plurality of network measurements NM via a machine-trained anomaly detection model 116 to an anomaly detection indicator ADI. Further, according to the embodiment, the anomaly identifier 100 comprises a further output unit 118, which is configured to provide the anomaly detection indicator ADI, which indicates the detection of the abnormal activity in an observed telecommunications network. By combining a detection and a prediction model in the anomaly identifier 100 both steps, namely prediction and detection and therefore the advantages of both steps, are combined in the anomaly identifier 100.

According to another embodiment the functionality of the further receiver unit 112 and/or the further model based mapping 114 unit and/or the further output unit 118 can be implemented in the receiver unit 102 and/or the model based mapping unit 104 and/or the output unit 108 of the anomaly detector, such that the further receiver unit 112 and/or the further model based mapping 114 unit and/or the further output unit 118 are not required.

Figure 2 depicts an exemplary telecommunications network 200.

The telecommunications network 200 comprises an anomaly identifier 100 according to any of the described embodiments for identifying an abnormal activity in the telecommunications network 200. Further, the telecommunications network 200 comprises a plurality of network probes P which are configured to sense the network measurements NM in relation to the telecommunications network 200, the network measurements NM comprising measurements like throughput, signal strength, QoS, radio usage, wire usage. The network probes P are distributed over the telecommunications network 200. According to the embodiment, three network probes P1, P2 and P3 are depicted. The network probes P could be independent units or part of communication devices.

Further, the telecommunications network 200 comprises a network controller 210 and a plurality of communication devices D. According to the embodiment, three communication devices D1, D2 and D3 are depicted.

According to an advantageous example, an interface between the anomaly identifier and the network controller for communication is provided. According to one embodiment, the functionality of the anomaly identifier is implemented at least partly at the network side. According to another embodiment, the functionality of the anomaly identifier is implemented at least partly at the communication device side. The interface between the anomaly identifier and the network controller is defined in order to provide application-specific alarms, in particular based on the anomaly prediction indicator API, and to inform how reliable the alarms are, in particular based on a/the reliability indicator RI.

According to a further advantageous example, in particular if a functionality of the anomaly identifier is implemented at least partly at the communication device side, the channel state information, CSI, report method is used to provide application-specific alarms, in particular based on the anomaly prediction indicator. This would mean that the CSI reporting method considers the alarms to reflect a worse CSI in the future. This is depicted with the dotted line between the communication device D3 and the network controller.

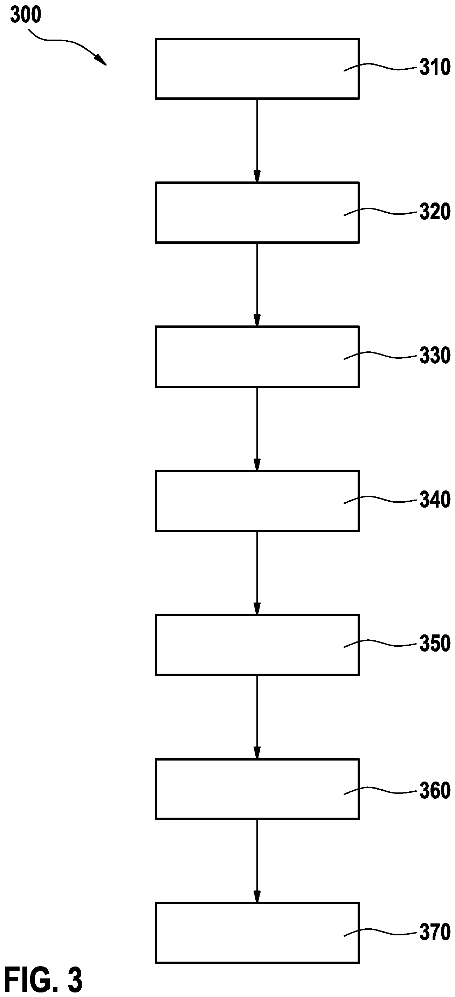

Figure 3 depicts a schematic flow diagram of a computer-implemented method 300 of operating a telecommunications network 200 according to an embodiment. At least some of the steps are performed at the anomaly identifier 100.

During operation of the telecommunications network 200 communication takes place in the telecommunications network 200.

The method 300 comprises at least the steps of:
sensing 310
receiving 320 at an anomaly identifier a plurality of network measurements NM in relation to the telecommunications network 200;
mapping 330 at the anomaly identifier the received plurality of network measurements NM via a machine-trained prediction model 106 to an anomaly prediction indicator API; and
providing 340 at the anomaly identifier the anomaly prediction indicator API, which indicates the prediction of the abnormal activity in the telecommunications network 200;
sending 350 an alarm based on the anomaly prediction indicator API to the network controller;
receiving 360 an alarm at the network controller, and
taking 370 reactive measures at the network controller.

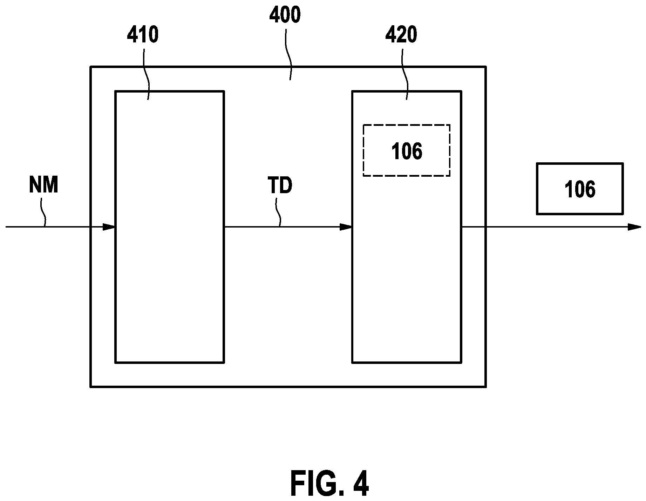

Figure 4 depicts a schematic block diagram of a model determination unit 400 for determining a prediction model. According to the embodiment the model determination unit 400 comprises an aggregator unit 410 which is configured to aggregate training data TD comprising a plurality of network measurements NM of a telecommunications network, for example a telecommunications network 200 according to the embodiments.

The model determination unit 400 comprises further a training unit 420, which is configured to train the prediction model 106 in dependence on the training data TD. The prediction model 106 is trained to predict the radio environment at a prospective time slot and/or to predict an abnormal activity.

Advantageously, the prediction model 106 learns a temporal correlation in the radio environment from training data TD and exploits the temporal correlation for prediction during operation of the anomaly identifier. The prediction model is trained to differentiate between normal and abnormal activity in the radio environment.

According to one embodiment, aggregating training data TD comprises collecting data by recording data of the radio environment of interest, for example by performing a plurality of network measurements in relation to a telecommunications network of interest. According to another embodiment, the training data TD is collected by means of simulation, in particular by simulating envisioned abnormal activity.

According to an advantageous example, aggregating training data TD comprises labelling the collected data, in particular by using an anomaly detection model 116 to detect anomalies in the data. For example, the training data TD is labelled as normal or abnormal activity. According to one embodiment, the training data TD can be labelled manually. According to a further embodiment, the training data TD can be labelled using the anomaly detection model 116. The anomaly detection model 116 being already trained for detecting anomalies does not require labelled data. Therefore, the anomaly detection model 116 can be used for labelling the radio environment records thereby reducing and/or avoiding manual labelling effort.

According to an advantageous example, the model determination unit 400 is configured to train a neural classification network 110, wherein the neural classification network 110 is trained to classify a consistency or an inconsistency between network measurements NM and predicted radio environment PRE. Advantageously, training data TD for training the neural classification network 110 contains data relating to abnormal activity.

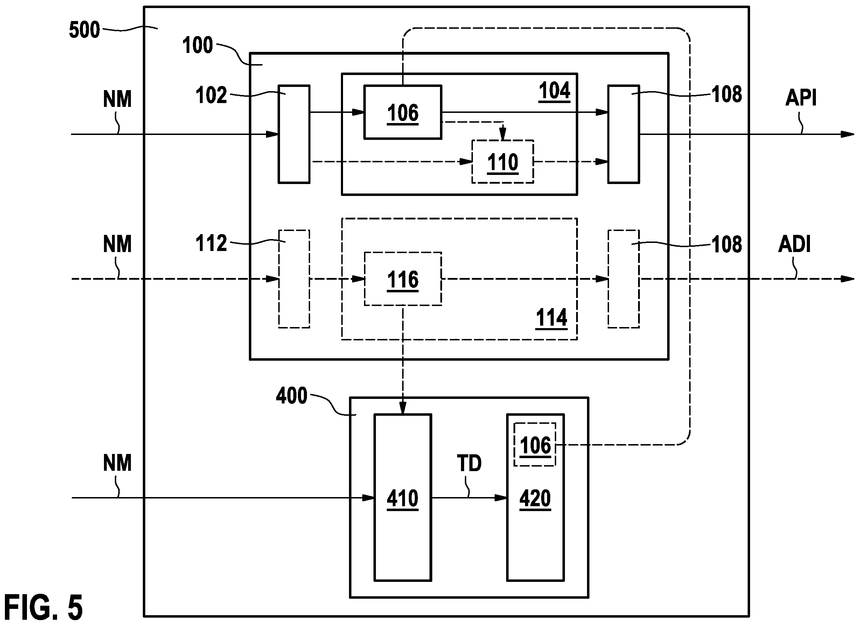

Figure 5 depicts schematically a system 500 comprising an anomaly identifier 100 according to the embodiments and a model determination unit 400 according to the embodiments. According to a further preferred embodiment, the system is part of a communication network 200 according to the above described embodiments.

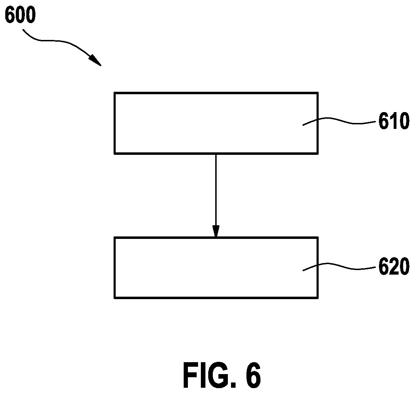

Figure 6 depicts schematically a training method 600 of a prediction model 106 according to an embodiment.

The method 600 for determining the prediction model 106 is performed during operation of the telecommunications network 200. According to the embodiment the telecommunications network comprises an anomaly identifier 100 and a model determination unit 400, for example a system 500 comprising both the anomaly identifier 100 and the model determination unit 400.

By determining the prediction model 106 during operation of the telecommunications network 200 using an anomaly detection model, the prediction model 106 does not need to be intensely trained beforehand, but can be trained during operation. Advantageously, the prediction model 106 improves over time. According to an embodiment, the prediction feature of the anomaly identifier 100 can be used in the telecommunications network 200 in some point of time, in particular when the prediction is reliable enough.

The method 600 comprises the steps of
aggregating 610 training data TD comprising a plurality of network measurements NM of a telecommunications network 200 at the aggregator unit 410 of the model determination unit 400.

The step of aggregating 610 training data TD comprises collecting data by receiving a plurality of network measurements NM in relation to the telecommunications network 200. The network measurements NM are sensed by the network probes P of the telecommunications network 200. The network measurements NM can be received directly at the aggregating unit or can be transmitted via the receiver unit 102 of the anomaly identifier 100. The step of aggregating 610 training data TD comprises further labelling the collected data, in particular by using an anomaly detection model 116 to detect anomalies in the data. According to the embodiment, during operation of the telecommunication network 200 the anomaly detection model 116 is used to detect anomalies. The further model-based mapping unit of the anomaly identifier 100 maps received plurality of network measurements via the machine-trained anomaly detection model 116 to an anomaly detection indicator, and the further output unit provides the anomaly detection indicator, which indicates the detection of the abnormal activity in the telecommunications network. At the same time, output of the anomaly detection model 116 can be used as labelled data relating to network measurements and therefore as training data.

The method comprises further a step of training 620 the prediction model 106 in dependence on the training data TD.

According to a further aspect, a computer-implemented method for determining a prediction model is adapted to operate a model determination unit according to the embodiments.

The proposed approach can be used to predict anomalies whose presence is detectable before their harmful actions. For instance, if a jammer enters the monitored telecommunications network 200, it will create a change in the channel propagation condition. The anomaly identifier 100 can detect the existence of the jammer based on the change of channel impulse response before the jammer starts transmitting signals to block the communication channel. Another example would be an obstacle blocking the transmission either for a short time, also called moving obstacle, or for a prolonged time, also called static obstacle.

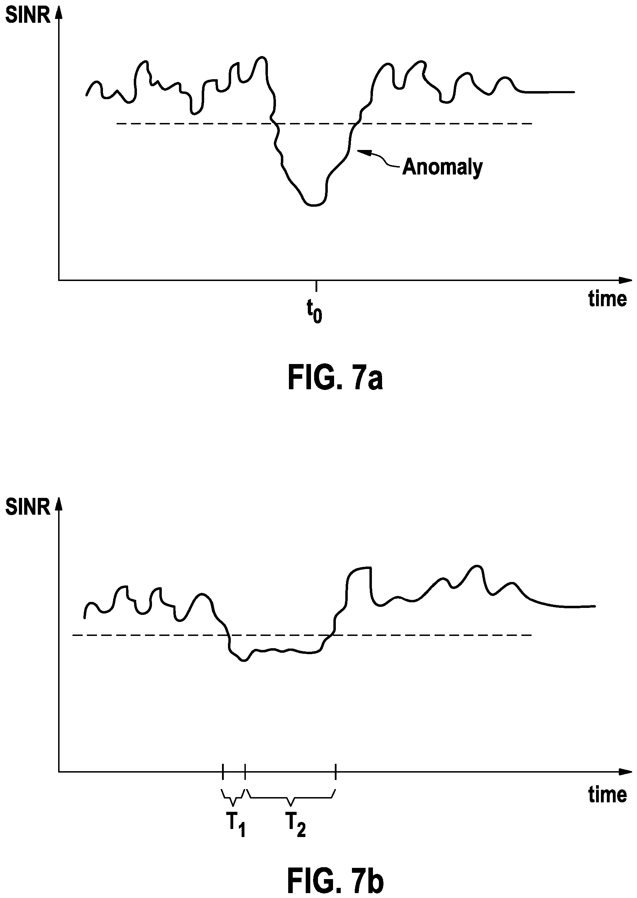

Referring now to Figures 7a and 7b exemplary embodiments of usage of the present disclosure is described. Figures 7a and 7b depict different sequences of network measurements, in particular signal-to-interference-plus-noise ratio, SINR, over time.

Figure 7a depicts for example a detection phase, which is used to train the prediction model 106. The prediction model 106 learns to differentiate between normal and abnormal activity, for instance by observing the signal-to-interference-plus-noise ratio, SINR, over time. Under normal condition, the radio environment, for example spectrum, signal strength, channel impulse response, is expected to continuously vary over the time. Anomalies, as an intrusion of external unwanted entities as well as jamming of the wireless spectrum cause abrupt changes, and can therefore be detected as a severe change in the SINR. For example in the case of a jammer, the SINR decreases due to the increase of the interfering power caused by the jammer. In the case of an obstacle, the received signal power decreases, also causing a decrease of the SINR. In both cases, the anomaly is progressive over time.

Figure 7b depicts for example a prediction phase using a trained prediction model 106. Based on an inconsistency between network measurements and predicted radio environment PRE the anomaly prediction indicator API is provided, which indicates the prediction of the abnormal activity in the telecommunications network 200. This happens for example in the time slot T₁. Based on the provided anomaly prediction indicator API, in particular an alarm being sent to the network controller, the network controller takes reactive measures, for example during the time slot T₂. According to the embodiment of Figure 7b due to the reactive measures, the SINR degradation is contained.

## Claims

1. An anomaly identifier (100) for identifying an abnormal activity in a telecommunications network (200), wherein the anomaly identifier comprises
a receiver unit (102) configured to receive a plurality of network measurements (NM) in relation to the telecommunications network (200);
a model-based mapping unit (104) configured to map the received plurality of network measurements (NM) via a machine-trained prediction model (106) to an anomaly prediction indicator (API), wherein the prediction model (106) is trained to predict the radio environment (PRE) at a prospective measurement time slot, and
an output unit (108) configured to provide the anomaly prediction indicator (API), which indicates the prediction of the abnormal activity in the telecommunications network (200), wherein the anomaly prediction indicator (API) is provided in dependence to a comparison of network measurements (NM) and the predicted radio environment (PRE).

2. The anomaly identifier (100) according to any of the preceding claims, wherein the anomaly identifier (100) comprises a neural classification network (110), and the neural classification network (110) is trained to classify a consistency between the network measurements (NM) and the predicted radio environment (PRE).

3. The anomaly identifier (100) according to any of the preceding claims, wherein the prediction model (106) is trained to directly predict an abnormal activity.

4. The anomaly identifier (100) according to any of the preceding claims, wherein the output unit (108) or a further output unit of the anomaly identifier (100) is configured to provide a reliability indicator (RI).

5. The anomaly identifier (100) according to any of the preceding claims, wherein the model based mapping unit (104) or a further model-based mapping unit (114) of the anomaly identifier (100) is configured to map the received plurality of network measurements (NM) via a machine-trained anomaly detection model (116) to an anomaly detection indicator (ADI), and the output unit (108) or a further output unit (118) is configured to provide the anomaly detection indicator (ADI), which indicates the detection of the abnormal activity in the telecommunications network (200).

6. A computer-implemented method (300) for identifying an abnormal activity in a telecommunications network (200), wherein the method (300) comprises at least the steps of:
receiving (320) a plurality of network measurements (NM) in relation to the telecommunications network (200);
mapping (330) the received plurality of network measurements (NM) via a machine-trained prediction model (106) to an anomaly prediction indicator (API); wherein the prediction model (106) predicts the radio environment (PRE) at a prospective measurement time slot and
providing (340) the anomaly prediction indicator (API), which indicates the prediction of the abnormal activity in the telecommunications network (200), wherein the anomaly prediction indicator (API) is provided in dependence to a comparison of network measurements (NM) and the predicted radio environment (PRE).

7. A telecommunications network (200) comprising an anomaly identifier (100) according to any of the claims 1 to 5, a plurality of network probes (P), a network controller (210) and a plurality of communication devices (D).

8. The telecommunications network (200) according to claim 7, wherein an interface between the anomaly identifier (100) and the network controller (210) for communication between the anomaly identifier (100) and the network controller (210) is provided.

9. The telecommunications network (200) according to any of the claims 7 or 8, in particular if a functionality of the anomaly identifier (100) is implemented at least partly at the communication device side, a channel state information, CSI, report method is used to provide application-specific alarms, in particular based on the anomaly prediction indicator (API).

10. A computer-implemented method (300) of operating a telecommunications network (200) according to any of the claims 7 to 9, wherein the method (300) comprises at least the steps of
receiving (320) at an anomaly identifier (100) a plurality of network measurements (NM) in relation to the telecommunications network (200);
mapping (330) at the anomaly identifier (100) the received plurality of network measurements (NM) via a machine-trained prediction model (106) to an anomaly prediction indicator (API), wherein the prediction model (106) predicts the radio environment (PRE) at a prospective measurement time slot;
providing (340) at the anomaly identifier (100) the anomaly prediction indicator (API), which indicates the prediction of the abnormal activity in the telecommunications network (200), wherein the anomaly prediction indicator (API) is provided in dependence to a comparison of network measurements (NM) and the predicted radio environment (PRE);
sending (350) an alarm based on the anomaly prediction indicator (API) to the network controller (210),
receiving (360) an alarm at the network controller (210), and
taking (370) reactive measures at the network controller (210).

11. A model determination unit (400) for determining a prediction model (106) for an anomaly identifier (100) according to any of the claims 1 to 5, wherein the model determination unit (400) comprises:
an aggregator unit (410) configured to aggregate training data (TD) comprising a plurality of network measurements (NM) of a telecommunications network (200);
a training unit (420) configured to train the prediction model (106) in dependence on the training data (TD), wherein the prediction model (106) is trained to predict the radio environment (PRE) at a prospective time slot and/or to predict an abnormal activity.

12. The model determination unit (400) according to claim 11, wherein aggregating training data (TD) comprises labelling the collected data, in particular by using an anomaly detection model to detect anomalies in the data.

13. The model determination (400) unit according to any of the claims 11 or 12, wherein the model determination unit (400) is configured to train a neural classification network (110), wherein the neural classification network (110) is trained to classify a consistency or an inconsistency between network measurements and predicted radio environment (PRE).

14. A computer-implemented method (600) for determining a prediction model (106) for an anomaly identifier (100) according to any of the claims 1 to 5, the anomaly identifier (100) for identifying an abnormal activity in a telecommunications network (200) during operation of a telecommunications network (200), wherein the method comprises:
aggregating (610) training data (TD) comprising a plurality of network measurements (NM) of a telecommunications network (200), wherein aggregating the training data (TD) comprises collecting data by receiving a plurality of network measurements (NM) in relation to the telecommunications network (200) and labelling the collected data, in particular by using an anomaly detection model to detect anomalies in the data;
training (620) the prediction model (106) in dependence on the training data (TD).

15. A system (500) comprising an anomaly identifier (100) according to any of the claims 1 to 5 and the model determination unit (400) according to any of the claims 11 to 13.

## Patentansprüche

1. Anomalieidentifizierer (100) zum Identifizieren einer anormalen Aktivität in einem Telekommunikationsnetzwerk (200), wobei der Anomalieidentifizierer Folgendes umfasst:
eine Empfängereinheit (102), die dazu ausgelegt ist, eine Mehrzahl von Netzwerkmessungen (NM) in Bezug auf das Telekommunikationsnetzwerk (200) zu empfangen;
eine modellbasierte Abbildungseinheit (104), die dazu ausgelegt ist, die empfangene Mehrzahl von Netzwerkmessungen (NM) über ein maschinentrainiertes Vorhersagemodell (106) auf einen Anomalievorhersageindikator (API) abzubilden, wobei das Vorhersagemodell (106) dazu trainiert ist, die Funkumgebung (PRE) an einem voraussichtlichen Messzeitschlitz vorherzusagen, und
eine Ausgabeeinheit (108), die dazu ausgelegt ist, den Anomalievorhersageindikator (API) bereitzustellen, der die Vorhersage der anormalen Aktivität in dem Telekommunikationsnetzwerk (200) angibt, wobei der Anomalievorhersageindikator (API) in Abhängigkeit von einem Vergleich von Netzwerkmessungen (NM) und der vorhergesagten Funkumgebung (PRE) bereitgestellt wird.

2. Anomalieidentifizierer (100) nach einem der vorhergehenden Ansprüche, wobei der Anomalieidentifizierer (100) ein neuronales Klassifikationsnetzwerk (110) umfasst und das neuronale Klassifikationsnetzwerk (110) dazu trainiert ist, eine Konsistenz zwischen den Netzwerkmessungen (NM) und der vorhergesagten Funkumgebung (PRE) zu klassifizieren.

3. Anomalieidentifizierer (100) nach einem der vorhergehenden Ansprüche, wobei das Vorhersagemodell (106) dazu trainiert ist, eine anormale Aktivität direkt vorherzusagen.

4. Anomalieidentifizierer (100) nach einem der vorhergehenden Ansprüche, wobei die Ausgabeeinheit (108) oder eine weitere Ausgabeeinheit des Anomalieidentifizierers (100) dazu ausgelegt ist, einen Zuverlässigkeitsindikator (RI) bereitzustellen.

5. Anomalieidentifizierer (100) nach einem der vorhergehenden Ansprüche, wobei die modellbasierte Abbildungseinheit (104) oder eine weitere modellbasierte Abbildungseinheit (114) des Anomalieidentifizierers (100) dazu ausgelegt ist, die empfangene Mehrzahl von Netzwerkmessungen (NM) über ein maschinentrainiertes Anomalieerkennungsmodell (116) auf einen Anomalieerkennungsindikator (ADI) abzubilden, und die Ausgabeeinheit (108) oder eine weitere Ausgabeeinheit (118) dazu ausgelegt ist, den Anomalieerkennungsindikator (ADI) bereitzustellen, der die Erkennung der anormalen Aktivität in dem Telekommunikationsnetzwerk (200) angibt.

6. Computer-implementiertes Verfahren (300) zum Identifizieren einer anormalen Aktivität in einem Telekommunikationsnetzwerk (200), wobei das Verfahren (300) mindestens die folgenden Schritte umfasst:
Empfangen (320) einer Mehrzahl von Netzwerkmessungen (NM) in Bezug auf das Telekommunikationsnetzwerk (200);
Abbilden (330) der empfangenen Mehrzahl von Netzwerkmessungen (NM) über ein maschinentrainiertes Vorhersagemodell (106) auf einen Anomalievorhersageindikator (API); wobei das Vorhersagemodell (106) die Funkumgebung (PRE) an einem voraussichtlichen Messzeitschlitz vorhersagt, und
Bereitstellen (340) des Anomalievorhersageindikators (API), der die Vorhersage der anormalen Aktivität in dem Telekommunikationsnetzwerk (200) angibt, wobei der Anomalievorhersageindikator (API) in Abhängigkeit von einem Vergleich von Netzwerkmessungen (NM) und der vorhergesagten Funkumgebung (PRE) bereitgestellt wird.

7. Telekommunikationsnetzwerk (200), das einen Anomalieidentifizierer (100) nach einem der Ansprüche 1 bis 5, eine Mehrzahl von Netzwerksonden (P), eine Netzwerksteuerung (210) und eine Mehrzahl von Kommunikationsvorrichtungen (D) umfasst.

8. Telekommunikationsnetzwerk (200) nach Anspruch 7, wobei eine Schnittstelle zwischen dem Anomalieidentifizierer (100) und der Netzwerksteuerung (210) zur Kommunikation zwischen dem Anomalieidentifizierer (100) und der Netzwerksteuerung (210) bereitgestellt ist.

9. Telekommunikationsnetzwerk (200) nach einem der Ansprüche 7 oder 8, insbesondere wenn eine Funktionalität des Anomalieidentifizierers (100) zumindest teilweise auf der Seite der Kommunikationsvorrichtung implementiert ist, wobei ein Kanalzustandsinformations-, CSI-, Berichtsverfahren verwendet wird, um anwendungsspezifische Alarme, insbesondere basierend auf dem Anomalievorhersageindikator (API), bereitzustellen.

10. Computer-implementiertes Verfahren (300) zum Betreiben eines Telekommunikationsnetzwerks (200) nach einem der Ansprüche 7 bis 9, wobei das Verfahren (300) mindestens die folgenden Schritte umfasst:
Empfangen (320) einer Mehrzahl von Netzwerkmessungen (NM) in Bezug auf das Telekommunikationsnetzwerk (200) an einem Anomalieidentifizierer (100);
Abbilden (330) der empfangenen Mehrzahl von Netzwerkmessungen (NM) über ein maschinentrainiertes Vorhersagemodell (106) auf einen Anomalievorhersageindikator (API) an dem Anomalieidentifizierer (100), wobei das Vorhersagemodell (106) die Funkumgebung (PRE) an einem voraussichtlichen Messzeitschlitz vorhersagt;
Bereitstellen (340) des Anomalievorhersageindikators (API) an dem Anomalieidentifizierer (100), der die Vorhersage der anormalen Aktivität in dem Telekommunikationsnetzwerk (200) angibt, wobei der Anomalievorhersageindikator (API) in Abhängigkeit von einem Vergleich von Netzwerkmessungen (NM) und der vorhergesagten Funkumgebung (PRE) bereitgestellt wird;
Senden (350) eines Alarms basierend auf dem Anomalievorhersageindikator (API) an die Netzwerksteuerung (210),
Empfangen (360) eines Alarms an der Netzwerksteuerung (210), und Ergreifen (370) reaktiver Maßnahmen an der Netzwerksteuerung (210).

11. Modellbestimmungseinheit (400) zum Bestimmen eines Vorhersagemodells (106) für einen Anomalieidentifizierer (100) nach einem der Ansprüche 1 bis 5, wobei die Modellbestimmungseinheit (400) Folgendes umfasst:
eine Aggregatoreinheit (410), die dazu ausgelegt ist, Trainingsdaten (TD) zu aggregieren, die eine Mehrzahl von Netzwerkmessungen (NM) eines Telekommunikationsnetzwerks (200) umfassen;
eine Trainingseinheit (420), die dazu ausgelegt ist, das Vorhersagemodell (106) in Abhängigkeit von den Trainingsdaten (TD) zu trainieren, wobei das Vorhersagemodell (106) dazu trainiert wird, die Funkumgebung (PRE) an einem voraussichtlichen Zeitschlitz vorherzusagen und/oder eine abnormale Aktivität vorherzusagen.

12. Modellbestimmungseinheit (400) nach Anspruch 11, wobei das Aggregieren von Trainingsdaten (TD) Kennzeichnen der gesammelten Daten, insbesondere unter Verwenden eines Anomalieerkennungsmodells zum Erkennen von Anomalien in den Daten, umfasst.

13. Modellbestimmungseinheit (400) nach einem der Ansprüche 11 oder 12, wobei die Modellbestimmungseinheit (400) dazu ausgelegt ist, ein neuronales Klassifikationsnetzwerk (110) zu trainieren, wobei das neuronale Klassifikationsnetzwerk (110) dazu trainiert wird, eine Konsistenz oder eine Inkonsistenz zwischen Netzwerkmessungen und einer vorhergesagten Funkumgebung (PRE) zu klassifizieren.

14. Computer-implementiertes Verfahren (600) zum Bestimmen eines Vorhersagemodells (106) für einen Anomalieidentifizierer (100) nach einem der Ansprüche 1 bis 5, wobei der Anomalieidentifizierer (100) zum Identifizieren einer anormalen Aktivität in einem Telekommunikationsnetzwerk (200) während eines Betriebs eines Telekommunikationsnetzwerks (200) dient, wobei das Verfahren Folgendes umfasst:
Aggregieren (610) von Trainingsdaten (TD), die eine Mehrzahl von Netzwerkmessungen (NM) eines Telekommunikationsnetzwerks (200) umfassen, wobei das Aggregieren der Trainingsdaten (TD) Sammeln von Daten durch Empfangen einer Mehrzahl von Netzwerkmessungen (NM) in Bezug auf das Telekommunikationsnetzwerk (200) und Kennzeichnen der gesammelten Daten, insbesondere unter Verwenden eines Anomalieerkennungsmodells zum Erkennen von Anomalien in den Daten, umfasst;
Trainieren (620) des Vorhersagemodells (106) in Abhängigkeit von den Trainingsdaten (TD).

15. System (500), das einen Anomalieidentifizierer (100) nach einem der Ansprüche 1 bis 5 und die Modellbestimmungseinheit (400) nach einem der Ansprüche 11 bis 13 umfasst.

## Revendications

1. Identificateur (100) d'anomalie destiné à identifier une activité anormale dans un réseau (200) de télécommunications, l'identificateur d'anomalie comportant
une unité réceptrice (102) configurée pour recevoir une pluralité de mesures de réseau (NM) en relation avec le réseau (200) de télécommunications ;
une unité (104) de mise en correspondance basée sur un modèle, configurée pour faire correspondre la pluralité reçue de mesures de réseau (NM), par l'intermédiaire d'un modèle (106) de prédiction entraîné par machine, à un indicateur de prédiction d'anomalie (API), le modèle (106) de prédiction étant entraîné pour prédire l'environnement radio (PRE) dans un créneau temporel de mesure à venir, et
une unité (108) de sortie configurée pour fournir l'indicateur de prédiction d'anomalie (API), qui indique la prédiction de l'activité anormale dans le réseau (200) de télécommunications, l'indicateur de prédiction d'anomalie (API) étant fourni d'après une comparaison de mesures de réseau (NM) et de l'environnement radio prédit (PRE).

2. Identificateur (100) d'anomalie selon l'une quelconque des revendications précédentes, l'identificateur (100) d'anomalie comportant un réseau neuronal (110) de classification, et le réseau neuronal (110) de classification étant entraîné pour classifier une cohérence entre les mesures de réseau (NM) et l'environnement radio prédit (PRE).

3. Identificateur (100) d'anomalie selon l'une quelconque des revendications précédentes, le modèle (106) de prédiction étant entraîné pour prédire directement une activité anormale.

4. Identificateur (100) d'anomalie selon l'une quelconque des revendications précédentes, l'unité (108) de sortie ou une autre unité de sortie de l'identificateur (100) d'anomalie étant configurée pour fournir un indicateur de fiabilité (RI).

5. Identificateur (100) d'anomalie selon l'une quelconque des revendications précédentes, l'unité (104) de mise en correspondance basée sur un modèle ou une autre unité (114) de mise en correspondance basée sur un modèle de l'identificateur (100) d'anomalie étant configurée pour faire correspondre la pluralité reçue de mesures de réseau (NM), par l'intermédiaire d'un modèle (116) de détection d'anomalies entraîné par machine, à un indicateur de détection d'anomalie (ADI), et l'unité (108) de sortie ou une autre unité (118) de sortie étant configurée pour fournir l'indicateur de détection d'anomalie (ADI), qui indique la détection de l'activité anormale dans le réseau (200) de télécommunications.

6. Procédé (300), mis en œuvre par ordinateur, d'identification d'une activité anormale dans un réseau (200) de télécommunications, le procédé (300) comportant au moins les étapes consistant à :
recevoir (320) une pluralité de mesures de réseau (NM) en relation avec le réseau (200) de télécommunications ;
faire correspondre (330) la pluralité reçue de mesures de réseau (NM), par l'intermédiaire d'un modèle (106) de prédiction entraîné par machine, à un indicateur de prédiction d'anomalie (API) ; le modèle (106) de prédiction prédisant l'environnement radio (PRE) dans un créneau temporel de mesure à venir et
fournir (340) l'indicateur de prédiction d'anomalie (API), qui indique la prédiction de l'activité anormale dans le réseau (200) de télécommunications, l'indicateur de prédiction d'anomalie (API) étant fourni d'après une comparaison de mesures de réseau (NM) et de l'environnement radio prédit (PRE).

7. Réseau (200) de télécommunications comportant un identificateur (100) d'anomalie selon l'une quelconque des revendications 1 à 5, une pluralité de sondes (P) de réseau, un contrôleur (210) de réseau et une pluralité de dispositifs (D) de communication.

8. Réseau (200) de télécommunications selon la revendication 7, une interface entre l'identificateur (100) d'anomalie et le contrôleur (210) de réseau étant mise en place pour une communication entre l'identificateur (100) d'anomalie et le contrôleur (210) de réseau.

9. Le réseau (200) de télécommunications selon l'une quelconque des revendications 7 ou 8, en particulier si une fonctionnalité de l'identificateur (100) d'anomalie est mise en œuvre au moins partiellement du côté du dispositif de communication, un procédé de compte rendu d'informations d'état de canal, CSI, étant utilisé pour fournir des alarmes spécifiques à une application, en particulier sur la base de l'indicateur de prédiction d'anomalie (API).

10. Procédé (300), mis en œuvre par ordinateur, d'exploitation d'un réseau (200) de télécommunications selon l'une quelconque des revendications 7 à 9, le procédé (300) comportant au moins les étapes consistant à
recevoir (320), au niveau d'un identificateur (100) d'anomalie, une pluralité de mesures de réseau (NM) en relation avec le réseau (200) de télécommunications ;
faire correspondre (330), au niveau de l'identificateur (100) d'anomalie, la pluralité reçue de mesures de réseau (NM), par l'intermédiaire d'un modèle (106) de prédiction entraîné par machine, à un indicateur de prédiction d'anomalie (API), le modèle (106) de prédiction prédisant l'environnement radio (PRE) dans un créneau temporel de mesure à venir ;
fournir (340), au niveau de l'identificateur (100) d'anomalie, l'indicateur de prédiction d'anomalie (API), qui indique la prédiction de l'activité anormale dans le réseau (200) de télécommunications, l'indicateur de prédiction d'anomalie (API) étant fourni d'après une comparaison de mesures de réseau (NM) et de l'environnement radio prédit (PRE) ;
envoyer (350) une alarme basée sur l'indicateur de prédiction d'anomalie (API) au contrôleur (210) de réseau,
recevoir (360) une alarme au niveau du contrôleur (210) de réseau, et
prendre (370) des mesures réactives au niveau du contrôleur (210) de réseau.

11. Unité (400) de détermination de modèle destinée à déterminer un modèle (106) de prédiction pour un identificateur (100) d'anomalie selon l'une quelconque des revendications 1 à 5, l'unité (400) de détermination de modèle comportant :
une unité (410) d'agrégation configurée pour agréger des données d'apprentissage (TD) comportant une pluralité de mesures de réseau (NM) d'un réseau (200) de télécommunications ;
une unité (420) d'entraînement configurée pour entraîner le modèle (106) de prédiction d'après les données d'apprentissage (TD), le modèle (106) de prédiction étant entraîné pour prédire l'environnement radio (PRE) dans un créneau temporel à venir et/ou pour prédire une activité anormale.

12. Unité (400) de détermination de modèle selon la revendication 11, l'agrégation de données d'apprentissage (TD) comportant un étiquetage des données collectées, en particulier en utilisant un modèle de détection d'anomalies pour détecter des anomalies dans les données.

13. Unité (400) de détermination de modèle selon l'une quelconque des revendications 11 ou 12, l'unité (400) de détermination de modèle étant configurée pour entraîner un réseau neuronal (110) de classification, le réseau neuronal (110) de classification étant entraîné pour classifier une cohérence ou une incohérence entre mesures de réseau et environnement radio prédit (PRE).

14. Procédé (600), mis en œuvre par ordinateur, de détermination d'un modèle (106) de prédiction pour un identificateur (100) d'anomalie selon l'une quelconque des revendications 1 à 5, l'identificateur (100) d'anomalie servant à identifier une activité anormale dans un réseau (200) de télécommunications pendant l'exploitation d'un réseau (200) de télécommunications, le procédé comportant les étapes consistant à :
agréger (610) des données d'apprentissage (TD) comportant une pluralité de mesures de réseau (NM) d'un réseau (200) de télécommunications, l'agrégation des données d'apprentissage (TD) comportant la collecte de données en recevant une pluralité de mesures de réseau (NM) en relation avec le réseau (200) de télécommunications et l'étiquetage des données collectées, en particulier en utilisant un modèle de détection d'anomalies pour détecter des anomalies dans les données ;
entraîner (620) le modèle (106) de prédiction d'après les données d'apprentissage (TD).

15. Système (500) comportant un identificateur (100) d'anomalie selon l'une quelconque des revendications 1 à 5 et l'unité (400) de détermination de modèle selon l'une quelconque des revendications 11 à 13.
